# FASCICULE DE BREVET EUROPEEN

(11) **EP 1 699 545 B1**
(45) Date de publication et mention de la délivrance du brevet: **22.10.2008**
(21) Numéro de dépôt: 04805694.9
(22) Date de dépôt: 10.12.2004
(51) Int. Cl.: B01D 53/62, B01D 53/14, B01D 53/34, B01D 53/75, B01D 53/78, B01D 53/84

(54) **PROCEDE DE SEQUESTRATION DE CARBONE SOUS LA FORME D UN MINER AL DANS LEQUEL LE CARBONE EST AU DEGRE D OXYDATION +3**
VERFAHREN ZUR KOHLENSTOFFSEQUESTRIERUNG IN FORM EINES MINERALS, IN DEM DER KOHLENSTOFF IN DER OXIDATIONSSTUFE +3 VORLIEGT
METHOD FOR CARBON SEQUESTRATION IN THE FORM OF A MINERAL IN WHICH CARBON HAS A +3 DEGREE OF OXYDATION

(30) Priorité: 23.12.2003 FR 0315209
(43) Date de publication de la demande: 13.09.2006
(73) Titulaire: Institut Français du Pétrole, 92852 Rueil Malmaison Cédex (FR)
(72) Inventeur: TOULHOAT, Hervé, F-95220 Herblay (FR); ROPITAL, François, F-92500 Rueil Malmaison Cedex (FR); DUVAL, Sébastien, F-53600 Evron (FR)
(86) Numéro de dépôt international: PCT/FR2004/003209
(87) Numéro de publication internationale: WO 2005/070521

(56) Documents cités:
- DE-A- 2 301 032
- US-A- 3 720 591
- US-A- 4 160 816
- US-A1- 2002 029 574

## Description

L'invention concerne un procédé de séquestration du carbone émis à l'atmosphère sous forme de CO₂.

### ART ANTÉRIEUR

La réduction électrochimique du CO₂ a été étudiée par de nombreux chercheurs, depuis le souhait de son utilisation comme source très large d'approvisionnement en carbone jusqu'aux tentatives de son utilisation comme source d'énergie sous forme méthane.

Des études sur l'électro-réduction du CO₂ ont débuté au milieu des années 1960. Elles montrent que les changements d'une part du milieu, selon qu'il est aprotique ou non, et d'autre part de l'électrode, selon que l'intermédiaire radicalaire carbonyle a des interactions avec la surface, conduisent à la formation de différents constituants dont : le monoxyde de carbone, l'acide formique, le méthane et éthane, des alcools tels que méthanol, éthanol et propanol, ainsi que de l'acide oxalique voire glycolique.

Ainsi, les réactions d'électro-réduction du CO₂ sur des électrodes en cuivre en milieu carbonate de potassium donnent des rendement de l'ordre de 30 % en méthane.

On connaît les études qui ont permis d'identifier les produits préférentiellement obtenus pour des milieux plus ou moins aqueux et pour des natures d'électrode différentes.

### Premier cas : le radical CO₂- est adsorbé sur l'électrode

### Milieu aqueux (électrode Au, Ag, Cu ou Zn) : on forme du monoxyde de carbone

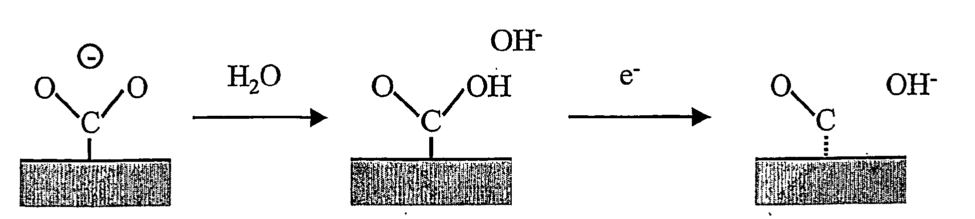

### Milieux non-aqueux (électrode Au, Ag, Cu, Zn, Cd, Sn ou In) : on forme du carbonate

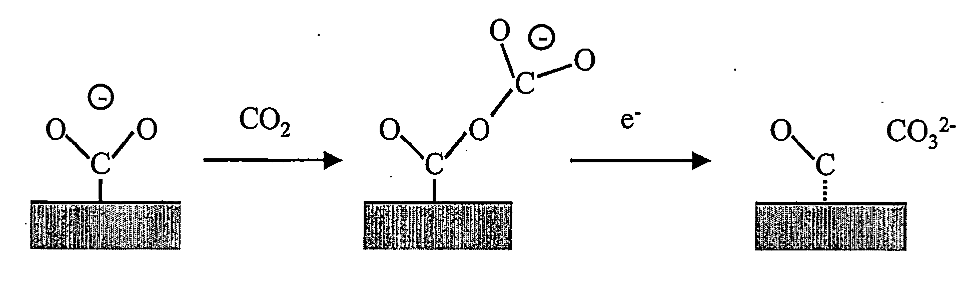

### Second cas : le radical CO₂⁻ n'est pas adsorbé sur l'électrode

### Milieu aqueux (électrode Cd, Sn, In, Pb, Tl ou Hg) : on forme de l'acide formique

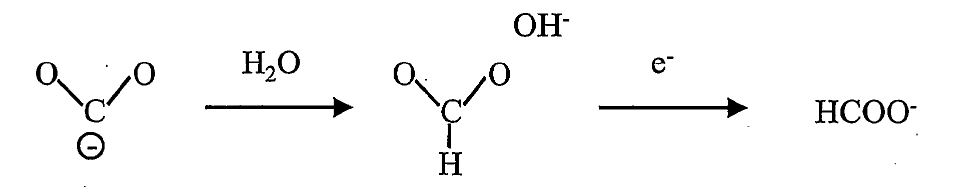

### Milieux non-aqueux (électrode Pb, Tl ou Hg) : on forme de l'acide oxalique

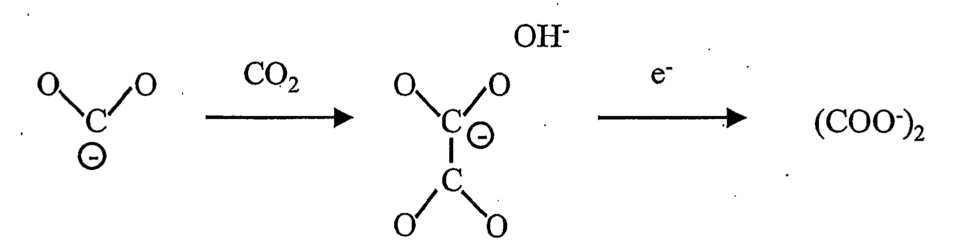

Dans ce contexte, des expériences ont également été menées sur du CO₂ en phase gaz sur des perovkites, qui conduisent préférentiellement à des alcools.

On connaît également les travaux de captation du CO₂ par des solvant organiques, lesquels permettent *in fine* de produire le CO₂ sous forme liquide. Ce CO₂ est ensuite injecté au fond des océans ou préférentiellement dans des cavités souterraines. Cependant, la durabilité de ces stockages a un caractère incertain sur des périodes très longues.

### DESCRIPTION DE L'INVENTION

On a maintenant découvert un nouveau procédé de séquestration du carbone émis à l'atmosphère sous forme de CO₂ qui permet notamment une séquestration de carbone à coût énergétique modéré et convient tout particulièrement pour limiter l'émission à l'atmosphère de gaz à effet de serre consécutive à la combustion d'hydrocarbures fossiles.

Le procédé de séquestration selon l'invention comprend :
a) une étape de concentration du CO₂ en phase liquide ;
b) une étape d'électro-réduction en milieu aprotique en un composé où le carbone passe au degré d'oxydation +3 sous forme d'acide oxalique ou formique ;
c) le cas échéant, une étape de ré-extraction de l'acide oxalique ou formique en phase aqueuse ; et
d) une étape de minéralisation par réaction avec un composé d'un élément M aboutissant à un composé stable ou le rapport atomique C/M est d'environ 2/1.

Les étapes successives du procédé de l'invention sont décrites plus en détail ci-après.

L'étape de concentration en phase liquide (a) peut être réalisée selon plusieurs méthodes.

Une première méthode (i) consiste en la liquéfaction du CO₂ réalisée selon les procédés classiques de captation du CO₂. Le CO₂ liquide est alors obtenu sous pression, par exemple à l'état supercritique.

Une autre voie (ii) consiste à absorber le CO₂ dans un liquide polaire aprotique non-miscible à l'eau ou miscible à l'eau en proportions variées. On peut citer comme exemple l'acétonitrile.

Selon une autre voie (iii), on envisage l'absorption du CO₂ dans un liquide ionique aprotique (ou « sel fondu ») non-miscible à l'eau ou miscible à l'eau en proportions variées. Un liquide ionique particulièrement approprié est l'hexafluorophosphate de 1-butyl-3-méthylimidazolium, représenté par la formule [BMIM]⁺ PF6⁻.

Encore une autre voie (iv) consiste à absorber le CO₂ dans une phase aqueuse contenant un alcool et/ou une amine.

Une autre méthode (v) consiste en l'absorption du CO₂ sous forme hydratée, dans un solvant par exemple aqueux, activée par voie enzymatique. L'enzyme activant l'hydratation est en général l'anhydrase carbonique. Dans ce cas, la solution obtenue peut ensuite être recyclée vers un procédé d'absorption en phase aqueuse en présence d'alcool et/ou d'amine telle que défini en iii) ci-dessus.

La solution aqueuse obtenue dans une méthode d'absorption telle que définie en (iv) ou (v) ci-dessus peut encore être recyclée vers un procédé de liquéfaction tel que défini en (i) ci-dessus.

Par ailleurs, les solutions aqueuses telles qu'obtenues par des procédés tels que définis en iii) ou iv) ci-dessus sont en général transférées en milieu liquide ionique insoluble dans l'eau par un procédé d'extraction liquide-liquide.

Selon la méthode mise en oeuvre pour réaliser la première étape de concentration en phase liquide du procédé de l'invention, la phase liquide obtenue consistera en du CO₂ liquide ou en une solution de CO₂ ou d'acide carbonique dans un liquide polaire aprotique non-miscible à l'eau ou miscible à l'eau en proportions variées ou dans un liquide ionique non-aqueux (« sel fondu ») plus ou moins miscible à l'eau.

La deuxième étape du procédé de l'invention consiste en une électro-réduction du CO₂ ou de l'acide carbonique concentré en phase liquide (degré d'oxydation +4) en un composé où le carbone est au degré d'oxydation +3. Elle est conduite dans la phase liquide obtenue à l'étape précédente, en général à pH compris entre 3 et 10, de préférence compris entre 3 et 7 et avec une anode maintenue à un potentiel de +0,5 à -3,5 volts par rapport à l'électrode normale à hydrogène. L'anode peut être constituée par exemple de platine, de diamant dopé au bore ou de carbone dopé à l'azote.

Par cette électro-réduction, on forme l'ion oxalique (sous forme d'acide oxalique ou d'oxalate) ou l'ion formique (sous forme d'acide formique ou de formiate).

L'étape (b) d'électro-réduction est, le cas échéant, conduite dans le CO₂ liquide sous pression.

L'étape (b) d'électro-réduction peut en outre être conduite dans le stockage de CO₂ souterrain, dans lequel le CO₂ liquide aura été injecté, le cas échéant

La troisième étape (c) du procédé de l'invention consiste une ré-extraction de l'acide oxalique (ou de l'oxalate) ou de l'acide formique (ou du formiate) par une phase aqueuse. Elle est mise en oeuvre lorsque l'électro-réduction a été effectuée en phase non-aqueuse. La formation de l'acide formique par électro-réduction se faisant en général en phase laqueuse, il n'est pas nécessaire dans ce cas de procéder à cette étape (c) de ré-extraction par une phase aqueuse.

L'étape finale (d) du procédé de l'invention (étape de minéralisation) consiste en général en l'attaque d'un minéral carbonaté, par exemple calcaire ou magnésien, par une solution aqueuse d'acide oxalique (ou d'oxalate) ou d'acide formique (ou de formiate) issue de l'étape d'électro-réduction (éventuellement après ré-extraction). Ladite solution est mise à réagir avec un composé d'un élément M donnant un minéral où le rapport atomique C/M est égal à environ 2/1.

La réaction du composé oxalique ou formique avec le minéral carbonaté redonne une mole de CO₂ par C₂O₄.

MCO₃ + (COOH)₂ → MC₂O₄ + CO₂ + H₂O

ou

MCO₃ + 2 HCOOH → M(HCO₂)₂ + CO₂ + H₂O

Le CO₂ ainsi libéré, en quantité deux fois moindre de celui qui a été mis en jeu au départ, peut être réintroduit dans le cycle du procédé de l'invention à la première étape.

L'élément M peut être tout élément métallique de degré d'oxydation +2. C'est le plus souvent le calcium ou le magnésium. Le composé d'élément M peut alors être par exemple une roche calcaire ou magnésienne. L'élément M préféré est le calcium. Le minéral formé est de préférence un oxalate de calcium tel que la Whewellite CaC₂O₄.H₂O.

Le procédé de l'invention (ou seulement la dernière étape) peut être réalisé *ex situ* ou *in* situ dans la roche calcaire ou magnésienne.

Ainsi, l'étape de minéralisation finale (d) peut avoir lieu par mise en contact de la solution d'acide oxalique ou formique avec une roche sédimentaire, par exemple calcaire ou magnésienne, de préférence par injection dans le sous-sol.

On remarquera que du point de vue bilan énergétique du procédé de l'invention, l'énergie investie pour passer du carbone +4 au carbone +3 dans la réaction d'électro-réduction de la deuxième étape n'est pas perdue ; elle est en fait stockée dans l'oxalate ou le formiate minéral formé. L'acide oxalique ou formique pourrait très bien être ré-extrait ultérieurement pour être utilisé en combustion, par exemple *in situ.* Il peut s'agir d'une oxydation par exemple bactérienne *in situ* ou *ex situ.* Dans ces processus, le carbone repasserait à l'état d'oxydation +4.

### EXEMPLES

### Exemple 1

Le CO₂ liquide est obtenu par un procédé classique de liquéfaction.

Le réacteur est rempli de CO₂ liquide sous pression (50 bar à température ambiante) et additionné d'eau progressivement de façon à maintenir le rapport molaire CO₂/H₂O de l'ordre de 100 afin d'orienter la réaction vers la synthèse d'acide oxalique. On ajoute du perchlorate de tétraammonium à hauteur de 0,1 mol/l.

L'électrode est en platine et la densité de courant est de 5 mA/cm2. Le potentiel de l'électrode est de -3 V par rapport au potentiel du couple Fe/Fe⁺. La solution est agitée de façon à limiter les effets de concentration aux électrodes.

La quantité de CO₂ à électro-réduire fixe la quantité d'électricité nécessaire.

Après électro-réduction, l'acide oxalique formé est injecté dans un récipient contenant du carbonate de calcium. L'acide oxalique réagit sur le carbonate pour former un oxalate de calcium. L'élévation de masse du résidu sec et nettoyé, met en évidence la séquestration du CO₂ sous forme minérale.

### Exemple 2

Le CO₂ liquide est obtenu par un procédé classique de liquéfaction.

Il est additionné de perchlorate de tétrammonium et injecté dans une cavité souterraine contenant des roches calcaires ou magnésiennes. L'électro-réduction est conduite directement dans la cavité à l'aide d'électrode en platine. La densité de courant est de 5 mA/cm². Le potentiel de l'électrode est de -3 V par rapport au potentiel du couple Fe/Fe⁺. La solution est agitée de façon à limiter les effets de concentration aux électrodes.

L'acide oxalique ainsi synthétisé réagit sur les roches calcaires ou magnésiennes libérant du CO₂, qui est également réduit, et un cation divalent qui précipite avec l'oxalate. Les réactions conduisent *in fine* à la séquestration de CO₂ par voie minérale. Le CO₂ libéré est recyclé vers l'étape de liquéfaction.

### Exemple 3

Du CO2 est absorbé par de l'eau en présence d'anhydrase carbonique, selon la description du brevet US-A-6 524 843.

On ajoute du perchlorate de tétraammonium à hauteur de 0,1 mol/l.

L'électrode est en platine et la densité de courant est de 5 mA/cm². Le potentiel de l'électrode est de -3 V par rapport au potentiel du couple Fe/Fe⁺. La solution est agitée de façon à limiter les effets de concentration aux électrodes.

La quantité de CO₂ à électro-réduire fixe la quantité d'électricité nécessaire.

Après électro-réduction, l'acide formique formé est injecté dans un récipient contenant du carbonate de calcium. L'acide formique réagit sur le carbonate pour former un formiate de calcium. L'élévation de masse du résidu sec et nettoyé, met en évidence la séquestration du CO₂ sous forme minérale.

### Exemple 4

Du CO₂ est absorbé dans un liquide ionique, l'hexafluorophosphate de 1-butyl-3-méthylimidazolium représenté par la formule [BMIM]⁺ PF6⁻.

On ajoute du perchlorate de tétraammonium à hauteur de 0,1 mol/l.

L'électrode est en platine et la densité de courant est de 5 mA/cm². Le potentiel de l'électrode est de -3 V par rapport au potentiel du couple Fe/Fe⁺. La solution est agitée de façon à limiter les effets de concentration aux électrodes.

La quantité de CO₂ à électro-réduire fixe la quantité d'électricité nécessaire.

Le liquide ionique saturé en CO₂ est mis en contact en continu avec une solution aqueuse, qui en extrait l'oxalate.

La solution aqueuse d'acide oxalique formée est injectée dans un récipient contenant du carbonate de calcium. L'acide oxalique réagit sur le carbonate pour former un oxalate de calcium. L'élévation de masse du résidu sec et nettoyé, met en évidence la séquestration du CO₂ sous forme minérale.

## Revendications

1. Procédé de séquestration de dioxyde de carbone émis à l'atmosphère, **caractérisé en ce qu'**il comprend :
a) une étape de concentration du CO₂ en phase liquide ;
b) une étape d'électro-réduction en milieu aprotique en un composé où le carbone passe au degré d'oxydation +3 sous forme d'acide oxalique ou formique ;
c) le cas échéant, une étape de ré-extraction de l'acide oxalique ou formique en phase aqueuse ; et
d) une étape de minéralisation par réaction dudit composé avec un composé d'un élément M donnant un minéral où le rapport atomique C/M est d'environ 2/1.

2. Procédé selon la revendication 1 **caractérisé en ce que** l'étape (a) de concentration en phase liquide consiste en la liquéfaction du CO₂, le CO₂ liquide étant alors obtenu sous pression, par exemple à l'état supercritique.

3. Procédé selon la revendication 1 **caractérisé en ce que** l'étape (a) de concentration en phase liquide consiste à absorber le CO₂ dans un liquide polaire aprotique, non-miscible à l'eau ou miscible à l'eau en proportions variées.

4. Procédé selon la revendication 1 **caractérisé en ce que** l'étape (a) de concentration en phase liquide consiste à absorber le CO₂ dans un liquide ionique aprotique, non-miscible à l'eau ou miscible à l'eau en proportions variées.

5. Procédé selon la revendication 4 **caractérisé en ce que** ledit liquide ionique consiste en l'hexafluorophosphate de 1-butyl-3-méthylimidazolium.

6. Procédé selon la revendication 1 **caractérisé en ce que** l'étape (a) de concentration en phase liquide consiste à absorber le CO₂ dans une phase aqueuse contenant un alcool et/ou une amine.

7. Procédé selon la revendication 1 **caractérisé en ce que** l'étape (a) de concentration en phase liquide consiste en une absorption du CO₂ sous forme hydratée, ladite concentration étant activée par voie enzymatique.

8. Procédé selon la revendication 7 **caractérisé en ce que** l'enzyme activant l'hydratation est l'anhydrase carbonique.

9. Procédé selon la revendication 8 **caractérisé en ce que** la solution obtenue est ensuite recyclée vers un procédé d'absorption en phase aqueuse en présence d'alcool et/ou d'amine selon la revendication 6.

10. Procédé selon la revendication 6 ou 9 **caractérisé en ce que** la solution aqueuse obtenue est recyclée vers un procédé de liquéfaction selon la revendication 2.

11. Procédé selon la revendication 6 ou 7 **caractérisé en ce que** la solution aqueuse obtenue est transférée en milieu liquide ionique insoluble dans l'eau par un procédé d'extraction liquide-liquide.

12. Procédé selon l'une des revendications 1 à 11 dans lequel l'étape d'électro-réduction (b) est conduite à pH compris entre 3 et 10 et avec une anode maintenue à un potentiel de +0,5 à -3,5 volts par rapport à l'électrode normale à hydrogène.

13. Procédé selon la revendication 12 dans lequel le pH est compris entre 3 et 7.

14. Procédé selon l'une des revendications 12 à 13 dans lequel l'anode utilisé dans l'étape d'électro-réduction est constituée de platine, de diamant dopé au bore ou de carbone dopé à l'azote.

15. Procédé selon l'une des revendications 1 à 14 dans lequel l'étape (b) d'électro-réduction est conduite dans le CO₂ liquide sous pression.

16. Procédé selon l'une des revendications 1 à 15 dans lequel le composé issu de l'étape (b) d'électro-réduction est l'acide oxalique ou un oxalate.

17. Procédé selon la revendication 16 dans lequel l'acide oxalique ou l'oxalate, obtenu en milieu non-aqueux est ré-extrait par une phase aqueuse.

18. Procédé selon l'une des revendications 1 à 17 dans lequel, à l'issue de l'étape (a), le CO₂ liquide est injecté dans un stockage de CO₂ souterrain.

19. Procédé selon la revendication 18 dans lequel l'étape (b) d'électro-réduction est conduite dans le stockage de CO₂ souterrain.

20. Procédé selon l'une des revendications 1 à 18 dans lequel l'étape de minéralisation finale consiste en l'attaque d'un minéral carbonaté par la solution aqueuse d'acide oxalique ou d'acide formique issue de l'étape d'électro-réduction.

21. Procédé selon la revendication 19 dans lequel ledit minéral carbonaté consiste en un minéral carbonaté calcaire ou magnésien.

22. Procédé selon l'une des revendications 1 à 20 dans lequel l'élément M est le calcium et le minéral formé est la Whewellite CaC₂O₄.H₂O.

23. Procédé selon l'une des revendications 1 à 21 dans lequel l'étape de minéralisation a lieu par mise en contact de la solution aqueuse d'acide oxalique ou d'acide formique issue de l'étape d'électro-réduction avec une roche sédimentaire calcaire ou magnésienne.

24. Procédé selon l'une des revendications 1 à 22 dans lequel l'étape de minéralisation finale a lieu par injection dans le sous-sol.

## Claims

1. A process for sequestrating carbon emitted into the atmosphere, **characterized in that** it comprises:
a) a step for concentrating CO₂ in the liquid phase;
b) a step for electro-reduction in an aprotic medium to a compound in which the carbon changes to oxidation number +3 in the form of oxalic acid or formic acid;
c) if appropriate, a step for re-extracting oxalic or formic acid in the aqueous phase; and
d) a step for mineralization by reacting said compound with a compound of an element M, producing a mineral in which the atomic ratio C/M is about 2/1.

2. A process according to claim 1, **characterized in that** step a) for concentration in the liquid phase consists of liquefying CO₂, the liquid CO₂ then being obtained under pressure, for example in the supercritical state.

3. A process according to claim 1, **characterized in that** step a) for concentration in the liquid phase consists of absorbing CO₂ in a polar aprotic liquid, not miscible with water or miscible with water in various proportions.

4. A process according to claim 1, **characterized in that** step a) for concentration in the liquid phase consists of absorbing CO₂ in an aprotic ionic liquid not miscible with water or miscible with water in various proportions.

5. A process according to claim 4, **characterized in that** said ionic liquid consists of 1-butyl-3-methylimidazolium hexafluorophosphate.

6. A process according to claim 1, **characterized in that** step a) for concentration in the liquid phase consists of absorbing CO₂ in an aqueous phase containing an alcohol and/or an amine.

7. A process according to claim 1, **characterized in that** step a) for concentration in the liquid phase consists of absorbing CO₂ in the hydrated form, said concentration being activated by an enzymatic pathway.

8. A process according to claim 7, **characterized in that** the hydration activating enzyme is carbonic anhydrase.

9. A process according to claim 8, **characterized in that** the solution obtained is then recycled to a process for absorption in the aqueous phase in the presence of an alcohol and/or amine in accordance with claim 6.

10. A process according to claim 6 or claim 9, **characterized in that** the aqueous solution obtained is recycled to a liquefaction process in accordance with claim 2.

11. A process according to claim 6 or claim 7, **characterized in that** the aqueous solution obtained is transferred to an ionic liquid medium which is insoluble in water by a liquid-liquid extraction process.

12. A process according to one of claims 1 to 11, in which the electro-reduction step b) is carried out at a pH in the range 3 to 10 and with an anode maintained at a potential of +0.5 to -3.5 volts with respect to the normal hydrogen electrode.

13. A process according to claim 12, in which the pH is in the range 3 to 7.

14. A process according to claim 12 or claim 13, in which the anode used in the electro-reduction step is constituted by platinum, diamond-doped with boron or carbon doped with nitrogen.

15. A process according to one of claims 1 to 14, in which the electro-reduction step b) is carried out in liquid CO₂ under pressure.

16. A process according to one of claims 1 to 15, in which the compound from electro-reduction step b) is oxalic acid or an oxalate.

17. A process according to claim 16, in which the oxalic acid or oxalate, obtained in a nonaqueous medium, is re-extracted using an aqueous phase.

18. A process according to one of claims 1 to 17 in which, at the end of step a), liquid CO₂ is injected into a subterranean CO₂ store.

19. A process according to claim 18, in which electro-reduction step b) is carried out in the subterranean CO₂ store.

20. A process according to one of claims 1 to 18, in which the final mineralization step consists of attack of a carbonated mineral by an aqueous solution of oxalic acid or formic acid from the electro-reduction step.

21. A process according to claim 19, in which said carbonated mineral consists of a calciferous or magnesia-containing carbonated mineral.

22. A process according to one of claims 1 to 20, in which the element M is calcium and the mineral formed is Whewellite, CaC₂O₄.H₂O.

23. A process according to one of claims 1 to 21, in which the mineralization step takes place by bringing the aqueous solution of oxalic acid or formic acid from the electro-reduction step into contact with a calciferous or magnesia-containing sedimentary rock.

24. A process according to one of claims 1 to 22, in which the final mineralization step is carried out by injection into the substratum.

## Patentansprüche

1. Verfahren zur Sequestrierung von Kohlendioxid, das in die Atmosphäre emittiert wird, **dadurch gekennzeichnet, dass** es umfasst:
a) einen Schritt der Konzentration des CO₂ in flüssiger Phase;
b) einen Schritt der Elektroreduktion in aprotischem Medium in eine Verbindung, worin der Kohlenstoff in Form von Oxal- oder Ameisensäure in Oxidationsgrad +3 übergeht;
c) gegebenenfalls einen Schritt der Reextraktion der Oxal- oder Ameisensäure in wässriger Phase; und
d) einen Schritt der Mineralisierung durch Reaktion der Verbindung mit einer Verbindung eines Elements M, die ein Mineral ergibt, worin das Atomverhältnis C/M bei etwa 2/1 liegt.

2. Verfahren nach Anspruch 1, **dadurch gekennzeichnet, dass** Schritt (a) der Konzentration in flüssiger Phase in der Verflüssigung des CO₂ besteht, wobei das flüssige CO₂ dann unter Druck, zum Beispiel in überkritischem Zustand, erhalten wird.

3. Verfahren nach Anspruch 1, **dadurch gekennzeichnet, dass** Schritt (a) der Konzentration in flüssiger Phase darin besteht, das CO₂ in einer polaren aprotischen Flüssigkeit zu absorbieren, die nicht mit Wasser mischbar ist, oder die mit Wasser in unterschiedlichen Anteilen mischbar ist.

4. Verfahren nach Anspruch 1, **dadurch gekennzeichnet, dass** Schritt (a) der Konzentration in flüssiger Phase darin besteht, das CO₂ in einer ionischen aprotischen Flüssigkeit zu absorbieren, die nicht mit Wasser mischbar ist, oder die mit Wasser in unterschiedlichen Anteilen mischbar ist.

5. Verfahren nach Anspruch 4, **dadurch gekennzeichnet, dass** die ionische Flüssigkeit aus 1-Butyl-3-methylimidazolium-hexafluorphosphat besteht.

6. Verfahren nach Anspruch 1, **dadurch gekennzeichnet, dass** Schritt (a) der Konzentration in flüssiger Phase darin besteht, das CO₂ in einer wässrigen Phase zu absorbieren, die einen Alkohol und/oder ein Amin enthält.

7. Verfahren nach Anspruch 1, **dadurch gekennzeichnet, dass** Schritt (a) der Konzentration in flüssiger Phase in einer Absorption des CO₂ in hydratierter Form besteht, wobei die Konzentration auf enzymatischem Weg aktiviert wird.

8. Verfahren nach Anspruch 7, **dadurch gekennzeichnet, dass** das Enzym, das die Hydratisierung aktiviert Carbonanhydrase ist.

9. Verfahren nach Anspruch 8, **dadurch gekennzeichnet, dass** die erhaltene Lösung anschließend zu einem Verfahren der Absorption in wässriger Phase in Anwesenheit von Alkohol und/oder Amin nach Anspruch 6 recycelt wird.

10. Verfahren nach Anspruch 6 oder 9, **dadurch gekennzeichnet, dass** die erhaltene wässrige Lösung zu einem Verfahren der Verflüssigung nach Anspruch 2 recycelt wird.

11. Verfahren nach Anspruch 6 oder 7, **dadurch gekennzeichnet, dass** die erhaltene wässrige Lösung durch ein Verfahren zur Flüssig-flüssig-Extraktion in ein ionisches wässriges Medium übertragen wird, das wasserunlöslich ist.

12. Verfahren nach einem der Ansprüche 1 bis 11, worin der Schritt der Elektroreduktion (b) bei einem pH-Wert im Bereich zwischen 3 und 10 durchgeführt wird, und wobei eine Anode auf einem Potential von +0,5 bis -3,5 Volt, bezogen auf eine normale Wasserstoffelektrode, gehalten wird.

13. Verfahren nach Anspruch 12, worin der pH-Wert im Bereich zwischen 3 und 7 liegt.

14. Verfahren nach einem der Ansprüche 12 bis 13, worin die Anode, die im Schritt der Elektroreduktion verwendet wird, aus Platin, aus Diamant, der mit Bor dotiert ist, oder aus Kohlenstoff, der mit Stickstoff dotiert ist, besteht.

15. Verfahren nach einem der Ansprüche 1 bis 14, worin Schritt (b) der Elektroreduktion in flüssigem CO₂ unter Druck durchgeführt wird.

16. Verfahren nach einem der Ansprüche 1 bis 15, worin die Verbindung, die aus Schritt (b) der Elektroreduktion stammt, Oxalsäure oder ein Oxalat ist.

17. Verfahren nach Anspruch 16, worin die Oxalsäure oder das Oxalat, die in nicht wässrigem Medium erhalten werden, mit einer wässrigen Phase reextrahiert werden.

18. Verfahren nach einem der Ansprüche 1 bis 17, worin am Ende von Schritt (a) das flüssige CO₂ in ein unterirdisches CO₂-Lager injiziert wird.

19. Verfahren nach Anspruch 18, worin Schritt (b) der Elektroreduktion in dem unterirdischen CO₂-Lager durchgeführt wird.

20. Verfahren nach einem der Ansprüche 1 bis 18, worin der Schritt der abschließenden Mineralisierung in einem Angriff eines kohlensauren Minerals durch die wässrige Lösung aus Oxal- oder Ameisensäure besteht, die aus dem Schritt der Elektroreduktion stammt.

21. Verfahren nach Anspruch 19, worin das kohlensaure Mineral aus einem kohlensauren Kalk- oder Magnesiummineral besteht.

22. Verfahren nach einem der Ansprüche 1 bis 20, worin das Element M Calcium ist und das gebildete Mineral Whewellit CaC₂O4.H₂O ist.

23. Verfahren nach einem der Ansprüche 1 bis 21, worin der Schritt der Mineralisierung durch In-Kontakt-Bringen der wässrigen Lösung aus Oxal- oder Ameisensäure, die aus dem Schritt der Elektroreduktion stammt, mit einem kalk- oder magnesiumhaltigen Sedimentgestein stattfindet.

24. Verfahren nach einem der Ansprüche 1 bis 22, worin der Schritt der abschließenden Mineralisierung durch Injektion unter die Erdoberfläche stattfindet.
